# EUROPÄISCHE PATENTANMELDUNG

(11) **EP 1 410 849 A1**
(43) Veröffentlichungstag der Anmeldung: **21.04.2004**
(21) Anmeldenummer: 02023366.4
(22) Anmeldetag: 18.10.2002
(51) Int. Cl.: B05C 1/08

(54) **Bearbeitungsanlage für Warenbahnen, beinhaltend eine modulare Einrichtung zum Auftragen von Fluiden auf Warenbahnen**

(71) Anmelder: SOLIPAT AG, CH-6300 Zug (CH)
(72) Erfinder: Nüssli, Rudolf, 7000 Chur (CH)
(74) Vertreter: Welch, Andreas

(57) **Zusammenfassung**

Die Erfindung betrifft eine Bearbeitungsanlage (1) für Warenbahnen (2), beinhaltend eine Einrichtung zum Auftragen von Fluiden, beispielsweise fliessfähigen Kunststoff- und/oder Klebemassen, im Sinne einer zumindest teilweisen Oberflächenbeschichtung auf Warenbahnen (2) nach einem direkten oder einem Umdruck-Prinzip. Solche Anlagen werden meist zum Laminieren von Warenbahnen (2) und einem oder mehreren Substraten eingesetzt. Erfindungswesentlich ist, dass die im Bereich einer Umlenk- und/oder Andruckwalze (4) vorgesehene Auftragseinrichtung (A) als Baueinheit modulartig und austauschbar aufgebaut ist.

## Beschreibung

Die vorliegende Erfindung betrifft eine Bearbeitungsanlage für Warenbahnen, beinhaltend eine Einrichtung zum Auftragen von Fluiden, beispielsweise fliessfähigen Kunststoff- und/oder Klebemassen, im Sinne einer zumindest teilweisen Oberflächenbeschichtung auf Warenbahnen nach einem direkten oder einem Umdruck-Prinzip. Solche Anlagen werden meist zum Laminieren von Warenbahnen und einem oder mehreren Substraten eingestzt.

Vorrichtungen zum Oberflächenbeschichten nach einem direkten oder einem Umdruckprinzip sind bekannt, beispielsweise aus den Dokumenten CH 648 497 A5 und DE 39 00 297 A1. Allen bisher bekannten Vorrichtungen ist jedoch der Nachteil gemeinsam, dass die jeweils eingesetzten Auftragswerke für bestimmte Substrate und/oder Fluide gut, allerdings für andere weniger gut oder gar nicht geeignet sind. Damit sind die Anwendungsbereiche einer solchen Bearbeitungsanlage limitiert.

Es ist daher eine Aufgabe der vorliegenden Erfindung, die Nachteile des Bekannten zu vermeiden, insbesondere also eine Einrichtung zum Auftragen von Fluiden auf eine Warenbahn bereitzustellen, mit welcher verschiedene Auftragstechniken realisierbar sind.

Erfindungsgemäss wird diese Aufgabe gelöst mit einer Bearbeitungsanlage für Warenbahnen, beinhaltend eine Einrichtung zum Auftragen von Fluiden auf eine Warenbahn gemäss der Merkmale der unabhängigen Patentansprüche.

Die erfindungsgemässe Bearbeitungsanlage dient dem Auftragen von Fluiden auf eine Warenbahn. Unter Fluid wird hier und im folgenden eine unter den Auftragsbedingungen fliessfähige Masse verstanden. Hierbei kann es sich um Kunststoffe oder auch sonstige zur Beschichtung geeignete Materialien handeln. Insbesondere vorgesehen sind auch Klebemittel, bevorzugterweise hot-melt Klebemittel und Zwei-Komponenten Klebemittel. Die Funktionalität des Fluids kann darüber hinaus einerseits in der Beschichtung an sich bestehen und/oder dazu dienen, eine Verbindung der Warenbahn mit einem anschliessend zuzuführenden ersten und/oder zweiten Substrat herbeizuführen. Unter Warenbahn werden hier und im folgenden Flächengebilde insbesondere textiler Art verstanden, aber auch beipielsweise Folien aus Kunststoff, Papier oder anderen Materialien.

Gemäss der Erfindung wird die beispielsweise auf einer Rolle befindliche Warenbahn über eine konventionelle Zuführanordnung der Bearbeitungsanlage zugeführt. Anschliessend durchläuft die Warenbahn eine Walzenanordnung zum Führen der Warenbahn. Diese Walzenanordnung umfasst mindestens eine Umlenk- und/oder Andruckwalze zum Führen der Warenbahn im Bereich der Auftragseinrichtung. Erfindungswesentlich ist, dass die im Bereich dieser Umlenk- und/oder Andruckwalze vorgesehene Auftragseinrichtung als Baueinheit modulartig aufgebaut ist. Unter modulartig bzw. Baueinheit ist hier und im folgenden zu verstehen, dass die jeweilige Auftragseinrichtung als Einheit der Bearbeitungsanlage angefügt und wieder abgenommen werden kann, ohne dass weitere aufwendige Umbauten der Bearbeitungsanlage notwendig würden. Wesentlich ist hierbei, dass die im Bereich der Auftragseinrichtung vorgesehene Umlenk- und/oder Andruckwalze unabhängig von der jeweils modulartig eingesetzten Auftragseinrichtung an der Bearbeitungsanlage verbleibt, diese also mit allen vorgesehenen Auftragseinrichtungen kompatibel ist und die "Trennlinie" markiert zwischen der modular austauschbaren Auftragseinheit und der Bearbeitungsanlage. Die mit dem Fluid zu beauschlagende Warenbahn wird hierbei stets mittels der besagten Umlenk- und/oder Andruckwalze an der Auftragseinrichtung derart vorbeigeführt, dass das Auftragen des Fluids auf die Warenbahn mit verschiedenen Auftragseinrichtungen möglich ist. Dies ermöglicht ein hohes Mass an Flexibilität des Verfahrensablaufs in Abhängigkeit von der jeweiligen Anwendung, da keine zeit- und kostenintensiven Umbauten der gesamten Bearbeitungsanlage mehr notwendig sind. Die Umrüstung auf eine andere Auftragstechnik kann nunmehr über den vergleichsweise simplen Austausch kompletter, modulartiger Auftragseinrichtungen erfolgen.

In einer bevorzugten Ausführungsform ist eine modulartigen Auftragseinrichtung vorgesehen, welche über einen schlitzförmigen Auftragsbereich verfügt. Dieser Auftragsbereich ist hierbei im Umschlingungsbereich der Umlenk- und/oder Andruckwalze angeordnet, das Fluid direkt auf die Warenbahn auftragend. Insbesondere kann hierbei der schlitzförmige Austrittsbereich direkt rechtwinkelig oder schräg auf der Warenbahn aufliegend, gegebenenfalls einen geeigneten Druck über die Warenbahn auf die Umlenkund/oder Andruckwalze ausübend, angeordnet sein. Unter einem geeigneten Druck wird hier und im folgenden ein solcher Druck verstanden, welcher die gleichmässige Auftragung des Fluids verbessert, ohne dass die zu diesem Zwecke notwendige Reibung der Auftragseinrichtung auf der Warenbahn unnötig hoch ausfällt. Ein Aufliegen des Auftragsbereichs auf der mit dem Fluid zu beaufschlagenden Warenbahn ist jedoch nicht erfindungswesentlich. Vielmehr ist auch ein frei über der Warenbahn angeordneter Auftragsbereich ausdrücklich möglich. In einer besonders bevorzugten Ausführungsform handelt es sich bei dem schlitzförmigen Austrittsbereich um eine Breitschlitzdüse.

In einer weiteren bevorzugten Ausführungsform ist eine modulartige Auftragseinrichtung vorgesehen, welche das Fluid über ein zumindest aus zwei Walzen bestehendes System in einem Umdruckverfahren auf die Warenbahn aufbringt. Hierbei können die beiden Walzen sowohl nebeneinander als auch übereinander angeordnet sein und der Drehsinn der beiden Walzen sowohl gleich- als auch entgegengerichtet sein. Wesentlich ist lediglich, dass über die der Umlenk- und/oder Andruckwalze zugewandte Walze der Auftragseinrichtung das Fluid auf die Warenbahn aufgebracht wird.

In einer weiteren geeigneten Ausführungsform ist eine modulartige Auftragseinrichtung vorgesehen, welche das Fluid über eine profilierte Walze fördert, wobei das Fluid im wesentlichen über Vertiefungen innerhalb der Walze transportiert wird. Hierbei erfolgt das Auftragen des Fluids auf der Warenbahn im wesentlichen entsprechend der Profilierung der profilierten Walze, insbesondere punktförmig.

Gemäss einer weiteren bevorzugten Ausführungsform ist eine modulartige Auftragseinrichtung vorgesehen, welche das Fluid über eine feinverteilende Sprühvorrichtung auf die Warenbahn aufbringt. Selbstverständlich ist die Sprühvorrichtung, insbesondere der Sprühkopf, dabei stets so zu bemessen, dass sie den spezifischen Eigenschaften des jeweiligen Fluids gerecht wird und eine effiziente Versprühung gewährleistet wird. Dies gilt insbesondere dann, wenn es es sich bei dem aufzubringenden Fluid um ein Klebemittel handelt.

In einer weiteren bevorzugten Ausführungsform und in Abwandlung der vorstehenden Ausführungsform ist eine modulartige Auftragseinrichtung vorgesehen, welche das Fluid über eine grobverteilende Giessvorrichtung auf die Warenbahn aufbringt. Eine solche Auftragseinrichtung ist inbesondere bei zähflüssigeren Fluiden von Nutzen, welche sich aufgrund erhöhter Viskosität nicht effizient versprühen lassen.

Selbstverständlich kann innerhalb der Bearbeitungsanlage eine dem Auftragen des Fluids auf die Warenbahn gemäss einer der vorstehend beschriebenen Ausführungsformen nachfolgend eine Zuordnung zum Zuführen eines ersten Substrats integriert sein, beispielsweise beim Laminieren der Warenbahn mit einem oder mehreren Substraten. In diesem Falle handelt es sich bei dem verwendeten Fluid typischerweise um ein solches, welches geeignet ist, eine Verbindung zwischen der Warenbahn und dem ersten Substrat herzustellen, vorzugsweise ein Klebemittel, insbesondere ein hot-melt Klebemittel.

Gemäss einer weiteren bevorzugten Ausgestaltungsform der Erfindung wird die Warenbahn nach ihrer Verbindung mit einem ersten Substrat in der Bearbeitungsanlage weitergefördert und einer weiteren Umlenk- und/oder Andruckwalze zugeführt. Diese zweite Umlenk- und/oder Andruckwalze ist im Bereich einer zweiten, modulartigen Auftragseinrichtung angeordnet. In Analogie zu den bereits beschriebenen Ausführungsformen sind auch hier wiederum alle vorstehenden Ausführungsformen einer modulartigen Auftragseinrichtung montierbar. Selbstverständlich kann je nach Führung des Verbunds aus Warenbahn und erstem Substrat die Auftragung eines zweiten Fluids auf der Seite der Warenbahn oder aber auf der Seite des ersten Substrats erfolgen. Darüberhinaus ist selbstverständlich auch die Verwendung von unterschiedlichen Fluiden zur Verbindung des ersten und des zweiten Substrats möglich, solange sich hieraus keine für den jeweiligen Anwendungszweck unerwünschten Kompatibilitätsprobleme ergeben. Durch Zuführung eines gegebenenfalls zweiten Substrats kann nun eine Verbindung entweder mit der Warenbahn oder dem ersten Substrat herbeigeführt werden. Durch die erfindungsgemäss erzielte Austauschbarkeit beider Auftragseinrichtungen ergibt sich somit eine hohe Flexibilität im Herstellungsprozess inbesondere von Mehrschicht-Laminaten, da je nach herzustellendem Laminat die Auftragseinrichtungen dem aufzutragenden Fluid leicht angepasst werden können.

Die Erfindung wird nachfolgend anhand von Zeichnungen erläutert. Es zeigen:
- Fig. 1: Schema der erfindungsgemässen Bearbeitungsanlage mit verschiedenen austauschbaren, modularen Auftragseinrichtungen;
- Fig. 2: Schema einer erfindungsgemässen Bearbeitungsanlage mit zwei austauschbaren, modularen Auftragseinrichtungen.

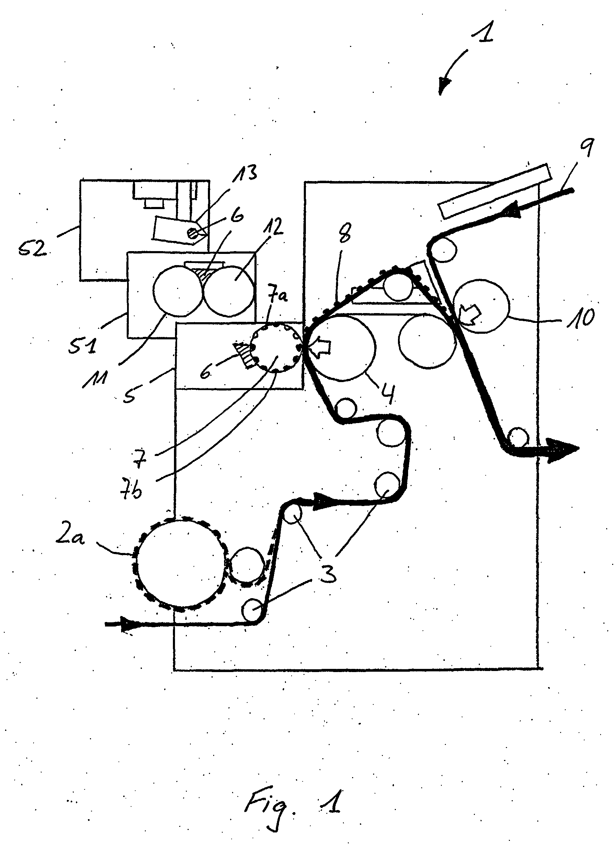

In Figur 1 ist eine erfindungsgemässe Bearbeitungsanlage 1 gezeigt, welche in einem ersten Bearbeitungsschritt dem Auftragen eines Fluids 6 auf eine Warenbahn 2 dient. Die Warenbahn 2 kann der Bearbeitungsanlage 1 optional auch als Rollenmaterial 2a zugeführt werden. Anschliessend durchläuft die Warenbahn 2 eine Walzenanordnung 3 zum Führen der Warenbahn. Diese Walzenandordnung 3 umfasst mindestens auch eine Umlenk- und/oder Andruckwalze 4 zum Führen der Warenbahn im Bereich einer Auftragseinrichtung A. Diese Auftragseinrichtung A ist hier modulartig aufgebaut, so dass sie ohne aufwendige Umbauten der Bearbeitungsanlage ausgetauscht werden kann, beispielsweise durch die Auftragseinrichtungen 51 oder 52. In dem gezeigten Beispiel ist eine Auftragseinrichtung 5 installiert, welche das Fluid 6 über eine profilierte Walze 7 fördert. Diese profilierte Walze 7 verfügt über Vertiefungen 7a, welche mit dem Fluid 6 gefüllt werden können, 7b. Nach einem Umdruckverfahren wird die zwischen der Umlenk- und/oder Andruckwalze 4 und der profilierten Walze 7 durchlaufende Warenbahn 2 mit dem in den Vertiefungen 7b der profilierten Walze 7 befindlichen Fluid 6 bedruckt. Nach dem Kontakt er Wahrenbahn 2 mit der profilierten Walze 7 befindet sich das Fluid 6 entsprechend dem Muster des Profils der profilierten Walze 7, beispielsweise in punktförmigen Bereichen 8, auf der Warenbahn 2. Bei geeigneter Wahl des Fluids 6, beipielsweise also im Falle eines Klebemittels, kann anschliessend ein erstes Substrat 9, beispielsweise zum Laminieren mit der Warenbahn 2, zugeführt werden. Im Bereich einer weiteren Umlenkund/oder Andruckwalze 10 wird das Substrat dann mit der mit dem Fluid 6 beschichteten Seite der Warenbahn 2 in Kontakt gebracht und anschliessend mit dieser weitergefördert.

Figur 1 zeigt darüber hinaus exemplarisch zwei weitere modulartige Auftragseinrichtungen 51 und 52, welche im Austausch anstatt der Auftragseinrichtung 5 montiert werden können. Unabhängig von der jeweils montierten modulartigen Auftragseinrichtung wird stets die Umlenk- und/oder Andruckwalze 4 benützt, um die Warenbahn 2 derart an der jeweiligen modulartigen Auftragseinrichtung vorbeizuführen, dass ein Beaufschlagen der Warenbahn 2 mit dem Fluid 6 möglich ist. Bei der Auftragseinrichtung 51 handelt es sich exemplarisch um ein zumindest aus zwei Walzen 11 und 12 bestehendes System, bei welchem das Fluid 6 über ein Umdruckverfahren auf die Warenbahn 2 aufgebracht wird. Die beiden Walzen 11 und 12 können hierbei sowohl nebeneinander als auch übereinander angeordnet und der Drehsinn der beiden Walzen 11 und 12 sowohl gleich- als auch entgegengerichtet sein.

Die modulartige Auftragseinrichung 52 verfügt über eine Vorrichtung 13 mit einem schlitzförmigen Bereich zum Auftragen des Fluid 6. Insbesondere kann es sich bei der Vorrichtung 13 auch um eine Breitschlitzdüse 13a handeln.

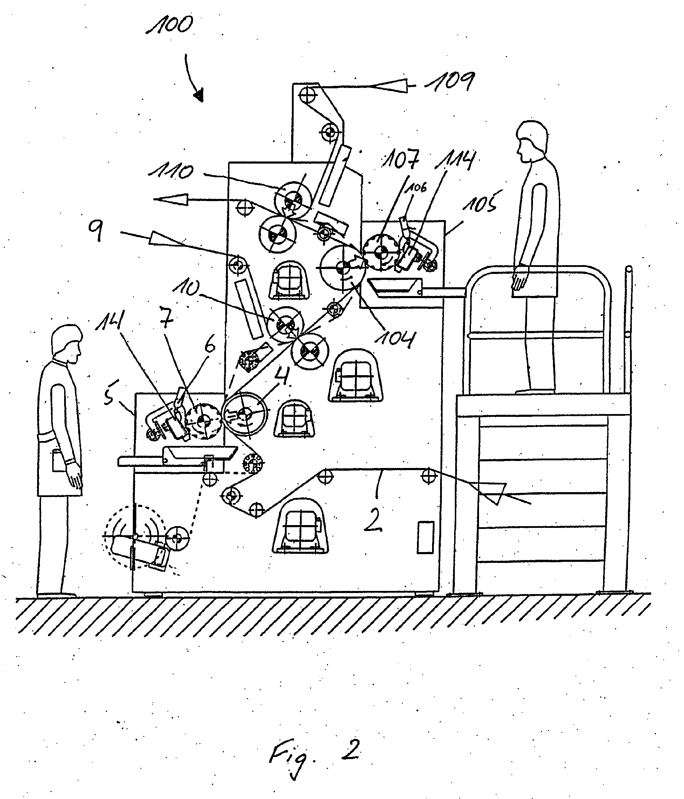

In Figur 2 ist eine erfindungsgemässe Vorrichtung 100 gezeigt, in welcher zwei modulartige Auftragseinrichtungen 5 und 105 montiert sind. Beide Auftragseinrichtungen 5 und 105 beinhalten je eine profilierte Walze 7 bzw. 107, welche über je eine Vorrichtung 14 bzw. 114 mit dem Fluid 6 bzw. 106 gespeist werden. Bei den Fluiden 6 und 106 kann es sich um gleiche wie auch verschiedenartige Fluide handeln. Die Auftragseinrichtungen 5 und 105 sind ebenfalls lediglich exemplarisch als profilierte Walzen gezeigt. Erfindungsgemäss können an ihrer statt auch alle anderen, vorstehend beschriebenen modularen Auftragseinrichtungen montiert werden, also als erste Auftragseinrichtung A eine Einrichtung 5, 51, 52, 53, 54 sowie als zweite Auftragseinrichtung A2, in Analogie entsprechend 105, 151, 152, 153 und 154. Die Zuführung eines ersten Substrats 9 erfolgt in Analogie zu der in Figur 1 beschriebenen Vorgehensweise. Über die Umlenk- und/oder Andruckwalze 10 wird die mit dem Fluid 6 beaufschlagte Warenbahn 2 in Kontakt gebracht. Die Warenbahn 2 und das erste Substrat 9 werden anschliessend gemeinsam weitertransportiert und im Umschlingungsbereich der Umlenk- und/oder Andruckwalze 104 über eine zweite modulare Auftragseinrichtung A2 mit einem weiteren Fluid 106 beaufschlagt. In dem gezeigten Beispiel erfolgt die Beaufschlagung mit dem zweiten Fluid 106 auf der Seite der Warenbahn 2. Selbstverständlich ist erfindungsgemäss aber auch eine Beaufschlagung mit dem zweiten Fluid 106 auf der Seite des ersten Substrats 9 möglich. Im weiteren Verfahrensablauf kann ein zweites Substrat 109 zugeführt werden, welches über eine weitere Umlenk- und/oder Andruckwalze mit dem ersten Substrat 9 bzw. der Warenbahn 2 in Kontakt gebracht wird und gemeinsam mit diesen weitergeführt wird. Mit der gezeigten erfindungsgemässen Vorrichtung ist es beispielsweise bei der Herstellung eines dreilagigen Laminats erstmals problemlos möglich, die modularen Auftragseinrichtungen A und A2 auszutauschen und somit das Auftragsprinzip an das jeweils herzustellende Laminat anzupassen.

## Patentansprüche

1. Bearbeitungsanlage (1) für Warenbahnen (2), beinhaltend eine Walzenanordnung (3) zum Führen der Warenbahn (2), mit einer Umlenk- und/oder Andruckwalze (4) sowie einer mit dieser zusammenwirkenden Auftragseinrichtung (A) zum Aufbringen eines Fluids (6) auf die Warenbahn 2, **dadurch gekennzeichnet, dass** die Auftragseinrichtung (A) als Baueinheit ausgebildet und trennbar mit der Bearbeitungsanlage (1) verbunden ist, wobei die Umlenk- und/oder Andruckwalze (4) dergestalt an der Bearbeitungsanlage (1) angeordnet ist, dass beim Abtrennen der Auftragseinrichtung (A) die Umlenk- und/oder Andruckwalze (4) an der Bearbeitungsanlage (1) verbleibt.

2. Vorrichtung nach Anspruch 1, **dadurch gekennzeichnet, dass** die Auftragseinrichtung A eine Baueinheit (52) ist, die mit einem schlitzförmigen Auftragsbereich (13), insbesondere beinhaltend eine Breitschlitzdüse (13a), versehen ist, welche im Umschlingungsbereich der Warenbahn (2) an der Umlenkund/oder Andruckwalze (4) zum Auftragen des Fluids (6) angeordnet ist.

3. Vorrichtung nach Anspruch 1, **dadurch gekennzeichnet, dass** die Auftragseinrichtung (A) eine Baueinheit (5;51) ist, welche zum Fördern des Fluids (6) wenigstens eine AuftragsWalze (11;12) aufweist, die im Umschlingungsbereich der Warenbahn (2) an der Umlenk- und/oder Andruckwalze (4) angeordnet ist.

4. Vorrichtung nach Anspruch 3, **dadurch gekennzeichnet, dass** die Auftragswalze eine Walze (7) mit profilierter Oberfläche ist, welche insbesondere Vertiefungen zum Fördern des Fluids (6) aufweist.

5. Vorrichtung nach Anspruch 1, **dadurch gekennzeichnet, dass** die Auftragseinrichtung (A) eine Baueinheit mit einer das Fluid (6) auftragenden Sprühvorrichtung ist, welche im Umschlingungsbereich der Warenbahn (2) an der Umlenk- und/oder Andruckwalze (4) angeordnet ist.

6. Vorrichtung nach Anspruch 1, **dadurch gekennzeichnet, dass** die Auftragseinrichtung (A) eine Baueinheit mit einer das Fluid (6) auftragenden Giessvorrichtung ist, welche im Umschlingungsbereich der Warenbahn (2) an der Umlenk- und/oder Andruckwalze (4) angeordnet ist.

7. Vorrichtung nach einem der Ansprüche 1-6, **dadurch gekennzeichnet, dass** der Auftragseinrichtung (A) nachgeschaltet eine Anordnung zum Zuführen eines Substrats (9) vorgesehen ist, durch welche das Substrat (9) mittels des aufgetragenen Fluids (6) mit der Warenbahn laminierbar ist.

8. Vorrichtung einem der Ansprüche 1-7, **dadurch gekennzeichnet, dass** eine zweite Auftragseinrichtung (A2: 105;151;152;153; 154) für ein Fluid (106) vorgesehen ist, welche der ersten Auftragseinrichtung (A: 5;51;52;53;54) nachgeschaltet, als Baueinheit ausgebildet und trennbar mit der Bearbeitungsanlage (1) verbunden ist, wobei eine zweite Umlenk- und/oder Andruckwalze (104) dergestalt an der Bearbeitungsanlage (1) angeordnet ist, dass beim Abtennen der zweiten Auftragseinrichtung (A2: 105;151;152;153;154) die zweite Umlenkund/oder Andruckwalze (104) an der Bearbeitungsanlage (1) verbleibt.

9. Vorrichtung nach Anspruch 8, **dadurch gekennzeichnet, dass** der zweiten modularen Auftragseinrichtung (A2: 105;151;152; 153;154) nachgeschaltet eine Anordnung zum Zuführen eines zweiten Substrats (109) vorgesehen ist, durch welche das zweite Substrat mittels des aufgetragenen Fluids (106) mit der Warenbahn (2) oder dem ersten Substrat (9) laminierbar ist.

10. Bearbeitungsanlage für Warenbahnen (2), insbesondere zur Herstellung von Mehrschicht-Laminaten, beinhaltend eine Walzenanordnung (3) zum Führen einer Warenbahn (2), und eine im Umschlingungsbereich der Warenbahn (2) an einer Umlenkund/oder Andruckwalze (4) angeordneten, ersten Auftragseinrichtung (A) für ein Fluid (6)**dadurch gekennzeichnet, dass** eine zweite Auftragseinrichtung (A2) für Fluide (106) vorgesehen ist, welche im Umschlingungsbereich der Warenbahn an einer Umlenk- und/oder Andruckwalze (104) angeordnet ist, und dass eine Anordnung zum Zuführen eines zweiten Substrats (109) vorgesehen ist, beinhaltend eine Umlenk- und/oder Andruckwalze (110).
